(19) **Europäisches Patentamt**
**European Patent Office**
**Office européen des brevets**

(11) **EP 2 803 920 A2**

(12) # EUROPEAN PATENT APPLICATION

(43) Date of publication:
**19.11.2014 Bulletin 2014/47**

(51) Int Cl.:
*F24J 2/24* *(2006.01)*   *F24J 2/34* *(2006.01)*
*F24J 2/42* *(2006.01)*   *F24J 2/46* *(2006.01)*

(21) Application number: **14163295.0**

(22) Date of filing: **03.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.05.2013 SE 1350603**

(71) Applicant: **Heij, Larry**
**725 96 Västeras (SE)**

(72) Inventor: **Heij, Larry**
**725 96 Västeras (SE)**

(74) Representative: **Reyier, Ann-Mari et al**
**c/o Nellpat**
**Box 138**
**683 23 Hagfors (SE)**

(54) **A solar collector**

(57)    The present invention relates to a solar collector (1) comprising an inlet (2), an outlet (3) and a channel system (4) arranged for transportation of a fluid from the inlet to the outlet while the fluid absorbs solar energy. The channel system comprises at least one section (22-25) including a distribution channel (18), a collecting channel (19), and a plurality of heat absorbing channels arranged for transportation of fluid from the distribution channel to the collecting channel. The channel system comprises a first transverse pipe (10) designed to house said distribution channel and a second transverse pipe (11) arranged at a distance from the first transverse pipe and designed to house said collecting channel, and a plurality of heat absorbing pipes (14) connected between the first and second transverse pipes and designed to house said plurality of heat absorbing cannels, and at least some of said heat absorbing pipes are provided with at least one return pipe (32) arranged to recirculate a part of the fluid in the heat absorbing cannel.

Fig. 1

EP 2 803 920 A2

**Description**

Field of the invention

The present invention relates to a solar collector comprising a channel system arranged for transportation of a fluid while the fluid absorbs solar energy.

Prior art

Solar collectors can be used for heating water, for example, to heat the water in a swimming pool, tap water, or water for heating houses using water radiators.

Traditionally, a solar collector includes an inlet pipe, an outlet pipe and a channel system including a heat absorbing pipe connected to the inlet pipe and arranged for transportation of a fluid from the inlet pipe to the outlet pipe. The heat absorbing pipe is arranged in a plurality of loops so that a fluid is transported in opposite direction in neighboring loops. The diameter of the heat absorbing pipe is usually the same as the diameter of the inlet pipe and the outlet pipe. A problem with this type of solar collector is that it has low efficiency, i.e. the energy absorption per unit area is low. Due to the low efficiency, a large number of solar collectors are needed, which require a large space.

WO007138117 discloses a solar collector comprising an inlet opening, an outlet opening and a channel system arranged for transportation of a fluid from the inlet opening to the outlet opening while the fluid absorbs solar energy. The channel system comprises a plurality of sections connected in series, each section including a distribution channel, a collecting channel, and a large number of parallel heat absorbing channels arranged for transportation of fluid from the distribution channel to the collecting channel. The collecting channel of one section is connected to the distribution channel of the next section. The heat absorbing channels of the sections are in parallel and the transportation direction of the fluid in the channels of neighboring sections are opposite each other. The channel system further comprises blocking elements arranged to prevent the fluid from flowing between the distribution channel of one of the sections and the collecting channel of the next section. The diameter of heat absorbing channels is essentially smaller than the diameter of the distribution channel and the collecting channel. The heat absorbing channels are formed between two folded metal plates connected to a third plate arranged between the folded plates. Due to the fact that the fluid is distributed to a large number of heat absorbing channels, the heat absorbing surface of the metal plates is increased, and accordingly the efficiency of the solar collector is increased. A disadvantage with this type of solar collector is that it is difficult to manufacture.

There is also a desire to further increase the efficiency of the solar collector and thereby to decrease the size of the solar cell.

Object and summary of the invention

An object of the present invention is to provide a solar collector having an improved efficiency, i.e. which has an improved energy absorption per unit area.

This object is achieved by a solar collector as defined in claim 1.

The solar collector comprising an inlet, an outlet and a channel system arranged for transportation of a fluid from the inlet to the outlet while the fluid absorbs solar energy, wherein the channel system comprises at least one section including a distribution channel, a collecting channel, and a plurality of heat absorbing channels arranged for transportation of fluid from the distribution channel to the collecting channel. The invention is characterized in that channel system comprises a first transverse pipe designed to house said distribution channel and a second transverse pipe arranged at a distance from the first transverse pipe and designed to house said collecting channel, and a plurality of heat absorbing pipes connected between the first and second transverse pipes and designed to house said plurality of heat absorbing cannels, and at least some of the heat absorbing pipes are provided with at least one return pipe arranged to recirculate a part of the fluid in the heat absorbing cannel.

The return pipe prolongs the dwell time for the fluid in the heat absorbing channels and thereby increases the energy absorption of the fluid in the heat absorbing channels. By increasing the energy absorption of the fluid in the channels, the temperature of the outgoing fluid from the channel system is increased. Accordingly, the energy absorption per unit area is increased and the efficiency of the solar collector is improved. Due to the higher efficiency, it is possible to reduce the number of solar collectors needed.

A further advantage of the solar collector of the present invention is that it is easy to manufacture. The solar collector can be manufactured using standard pipes available on the market. Thus, the cost for producing the solar cell becomes low.

According to an embodiment of the invention, the diameter of the return pipes is smaller than the diameter of the heat absorbing pipe. The return pipe is arranged to transport fluid from the heat absorbing pipe in a direction opposite the flow direction in the heat absorbing pipe and then to return the fluid to the heat absorbing pipe in order to recirculate a part of the fluid in the heat absorbing pipe. The fluid is first transported a distance in the heat absorbing pipe while it absorbs solar energy, then it is transported in the return pipe a distance along the heat absorbing pipe in a direction opposite the flow direction in the heat absorbing pipe while it absorbs solar energy, and the fluid is then returned to the heat absorbing pipe down streams of the point it was retrieved, and is then transported the same distance again in the heat absorbing pipe while it absorbs solar energy. In this way, the distance the fluid is transported in the solar collector while it absorbs solar energy is increased, and thus efficiency of the solar collector is significantly increased.

According to an embodiment of the invention, at least some of said heat absorbing pipes are provided with at least two return pipes. This embodiment further increases the efficiency of the solar collector.

According to an embodiment of the invention, both ends of the return pipe are provided with hooks extending into the heat absorbing pipes and bended towards each other. The hooks achieves a constriction of the cross-sectional area of the heat absorbing channels and thereby facilities the transportation of fluid into the return pipes and by that improves the recirculation of fluid.

The flow velocity in the heat absorbing pipes depends on the relation between the cross-sectional area of the transverse pipes, the cross-sectional area of heat absorbing pipes, and the number of heat absorbing pipes. By designing the channel system so that the flow velocity of the fluid in the heat absorbing pipes becomes slower than the flow velocity of the fluid in the transverse pipes, it is possible to increase the dwell time for the fluid in the heat absorbing channels and thereby to increase the energy absorption of the fluid in the channels. By increasing the energy absorption of the fluid in the channels, the temperature of the outgoing fluid from the channel system is increased. This enables a fast transportation of the fluid to and from the solar collector, and a slow transportation of fluid in the heat absorbing channels. Accordingly, the energy absorption per unit area is increased and the efficiency of the solar collector is improved. Due to the higher efficiency, it is possible to reduce the number of solar collectors needed.

According to an embodiment of the invention, the ratio between the sum of the cross-sectional areas of the heat absorbing pipes in one section, and the cross-sectional area of the first transverse pipe is between is between 1.5 and 3, preferably between 1.8 and 2.8, and most preferably between 2 and 2.6. With the cross-sectional area of a pipe is meant the inner cross-sectional area, i.e. the cross-sectional area of the channel defined by the pipe. Preferably, the cross-sectional areas of the first and second transverse pipes are about the same. Thereby, the ratio between the sum of the cross sectional-areas of the heat absorbing pipes in one section, and the cross-sectional area of the second transverse pipe is also between is between 1.5 and 3, preferably between 1.8 and 2.8, and most preferably between 2 and 2.6. If the ratio between the sum of the cross-sectional areas of the heat absorbing pipes and the cross-sectional area of any of the first transverse pipe is too large, the flow becomes unevenly distributed between the heat absorbing channels, which may cause that some of the channels are not entirely filled with fluid, and accordingly the fluid in the those channels can not absorb all heat absorbed by the material in the pipes. If the ratio between the sum of the cross-sectional areas of the heat absorbing pipes and the cross-sectional area of any of the first transverse pipe is too small, the water will flow faster in the heat absorbing pipes than in the transverse pipes, leading to a decreased efficiency of the solar collector. This embodiment achieves a sufficient slow down of the flow velocity in the heat absorbing channels to improve the efficiency of the solar collector and to ensure an even distribution of fluid between the heat absorbing channels to enable the fluid in the channels to absorb all heat absorbed by the material in the pipes.

According to an embodiment of the invention, the number of heat absorbing pipes in a section is five and the ratio between the inner diameter of the first transverse pipe and the inner diameter of each of the heat collecting pipes is between 1.3 and 1.7, and more preferably between 1.4 and 1.6. This embodiment of the invention provides a solar collector that is easy to manufacture and achieves a high efficiency.

According to an embodiment of the invention, the solar collector comprises a plurality of sections connected in series, the collecting channel of one section is connected to the distribution channel of the next section, the sections are arranged such that the heat absorbing pipes of neighboring sections are in parallel and the transportation direction of the fluid in the heat absorbing pipes of neighboring sections are opposite each other, and the first and a second transverse pipe are arranged to alternatingly house said distribution channels and collecting channels, and include blocking elements arranged to prevent the fluid from flowing between the distribution channel of one of the sections and the collecting channel of the next section. By increasing the number of sections, the temperature of the outgoing fluid is increased. By arranging the sections such that the transportation direction of the fluid in the heat absorbing pipes of neighboring sections are opposite each other achieves a compact solar collector.

According to an embodiment of the invention, the solar collector includes a casing for housing the channel system, the casing comprising a back side made of metal sheet and a front side made of a transparent material, and the heat absorbing pipes is in thermal contact with the back side of the casing. With thermal contact is meant that heat from the metal sheet can transferred to the pipes, either through mechanical contact or by radiation. The metal sheet behind the heat absorbing pipes increases the heat absorbing area of the solar collector and accordingly the efficiency of the solar collector. The sun rays penetrated through the transparent front side and are absorbed by the pipes and the sheet. Heat from the sheet is transferred to the pipes by mechanical contact and radiation.

According to an embodiment of the invention, said heat absorbing pipes and said back side are made of copper and painted in a dark color to further increase the heat absorption.

Brief description of the drawings

The invention will now be explained more closely by the description of different embodiments of the invention and with reference to the appended figures.

Fig. 1 shows a schematic view of solar collector including a plurality of heat absorbing pipes according to a first embodiment of the invention.
Fig. 2 shows a cross section through the solar collector shown in figure 1 along a line A - A.
Fig. 3 shows an enlarged view of a part of a heat absorbing pipe including return pipes according to a second embodiment of the invention.

Detailed description of preferred embodiments of the invention

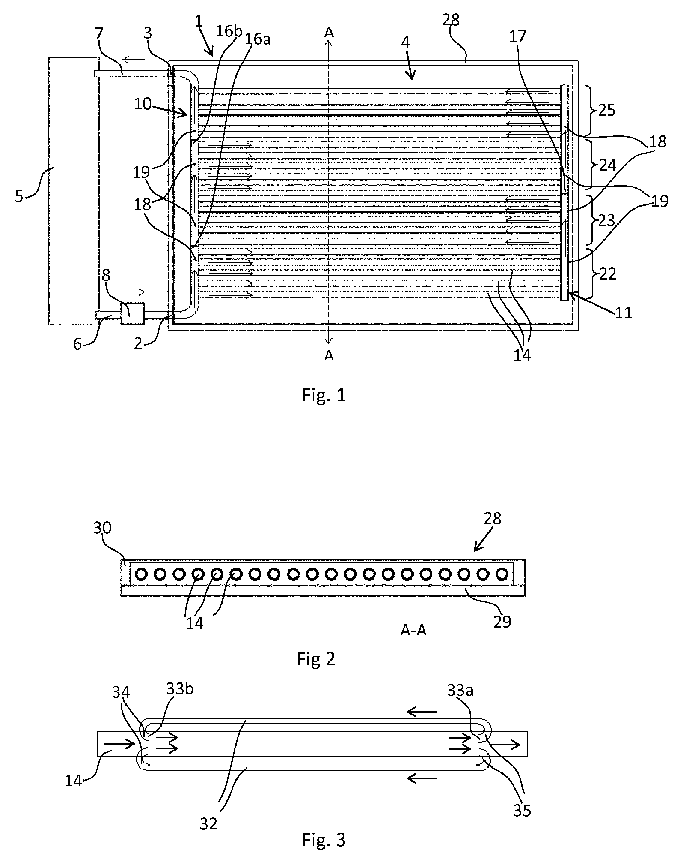

Figure 1 shows a solar collector 1 according to a first embodiment of the invention. The solar collector 1 comprises an inlet 2, an outlet 3 and a channel system 4 arranged for transportation of a fluid from the inlet to the outlet while the fluid absorbs solar energy and the fluid is heated. The solar collector 1 is connected to an accumulator tank 5 for accumulating a fluid, such as water. The accumulator tank is, for example, a swimming pool or a domestic water heater. An inlet pipe 6 and an outlet pipe 7 are connected between the accumulator tank 5 and the inlet and outlet of the solar collector 1. A circulation pump 8 is arranged for pumping the fluid from the tank to the solar collector, through the channel system 4 and then back to the tank

The channel system 4 comprises a first transverse pipe 10 and a second transverse pipe 11 at a distance from the first transverse pipe. The first and second transverse pipes are preferably arranged in parallel. In this embodiment, the first transverse pipe 10 is connected between the inlet 2 and outlet 3 of the solar collector. In another embodiment, the second transverse pipe 11 can be connected the outlet 3. Preferably, the diameter of the inlet pipe 6, the first and second transverse pipes 10, 11, and the outlet pipe are the same. The channel system 4 further comprises a plurality of parallel heat absorbing pipes 14 connected between the first and second transverse pipes 10, 11 and defining a plurality of heat absorbing channels. Preferably, the diameter of the heat collecting pipes is equal. The diameters of the heat collecting pipes are smaller than the diameters of the transverse pipes 10, 11. Thus, the heat absorbing surface in relation to the amount of fluid in the heat absorbing pipes is increased for heat collecting pipes compared to the transverse pipes.

The heat absorbing pipes are preferably made of metal, and most preferably made of copper, which has a high ability to absorb heat. Preferably, the transverse pipes 10, 11 are also made of copper. The heat absorbing pipes are, for example, connected to the transverse pipes by means of soldering.

In this embodiment, the transverse pipes are made by copper tubes having an outer diameter of 22mm and the heat absorbing pipes 14 are made by copper tubes having an outer diameter of 15mm. In an alternative embodiment, the transverse pipes are made by copper tubes having an outer diameter of 32mm and the heat absorbing pipes 14 are made by copper tubes having an outer diameter of 22mm. Such copper tubes have standard dimensions and are commercially available.

The first and second transverse pipes include one or more blocking elements 16a-b, 17 dividing the interior of the transverse pipes into a plurality of chambers separated from each other. The chambers define distribution channels 18 and collecting channels 19. The first and second transverse pipes are designed to alternatingly house the distribution channels and collecting channels.

The channel system comprises a plurality of sections 22 - 25 connected in series. Preferably, the channel system incudes at least three sections. In this embodiment, the channel system includes four sections. More preferably, the channel system incudes at least five sections, and most preferably, the channel system incudes at least six sections. A larger number of sections achieve a higher temperature of the fluid from the outlet of the solar collector.

Each section includes a distribution channel 18, a collecting channel 19, and a plurality of heat absorbing channels, defined by the pipes 14, arranged for transportation of fluid from the distribution channel to the collecting channel. The inlet pipe 6 is connected to the first transverse pipe 10 and the inlet pipe is arranged in fluid communication with the distribution channel of a first section 22 of the channel system, and the outlet pipe 7 is connected in fluid communication with the collecting channel of a last section 25 of the channel system. The collecting channel 19 of one section is connected to the distribution channel 18 of the next section, and the sections are arranged so that the transportation direction of the fluid in the channels of neighboring sections are opposite each other, as shown in the figure.

The blocking elements are arranged to prevent the fluid from flowing between the distribution channel 18 of one of the sections 22, 23 and the collecting channel 19 of the next section 24. The blocking element 16a is arranged to prevent the fluid from flowing from the distribution channel 18 of a first sections 22 to the collecting channel 19 of a second section 23. The blocking element 16b is arranged to prevent the fluid from flowing from the distribution channel 18 of a third section 24 to the collecting channel 19 of a fourth section 25. The blocking element 17 is arranged to prevent the fluid from flowing from the distribution channel 18 of the second section 23 to the collecting channel 19 of the fourth section 25. The transverse pipes may include a plurality of connected pipe parts and the blocking elements are arranged between the pipe parts.

The fluid enters the distribution channel of the first section 22. The fluid is distributed to the heat absorbing channels of the first section. When the fluid enters the heat absorbing channels, the flow velocity of the fluid is decreased. Due to the decreased flow velocity in the heat absorbing channels, the time it takes for the fluid to pass through the heat absorbing channels is increased leading to an increased absorption of the solar energy. The fluid is collected in the collection channel on the opposite side of the first section. When the fluid enters the collection channel, the flow velocity of the fluid is increased. The fluid is continuing to the distribution channel of the second section 23. Thereafter, the fluid is distributed to the heat absorbing channels of the second section 23. The flow direction of the fluid in the heat absorbing channels of the second section is opposite the flow direction in the heat absorbing channels of the first section. The flow direction in the solar collector is shown by arrows. This procedure it repeated for each section.

In this embodiment, the number of heat absorbing pipes in each section is five. The number of heat absorbing pipes in each section depends on the relation between the cross-sectional area of the transverse pipes and the cross-sectional area of heat absorbing pipes. According to the invention, the relation between the cross-sectional areas of the transverse pipes, the cross-sectional area of heat absorbing pipes, and the number of heat absorbing pipes is such that flow velocity in the heat absorbing pipes becomes slower than the flow velocity in the transverse pipes during transportation of fluid in the channel system. This is achieved when the ratio between the sum of the cross sectional areas of the heat absorbing pipes in one section, and the cross-sectional area of the transverse pipes is between 1.5 and 3, preferably between 1.8 and 2.8, and most preferably between 2 and 2.6.

The following formula can be used when the cross-sectional areas of the heat absorbing pipes are equal and the cross-sectional area of the first and second transverse pipes are equal:

$$1.5 < N*A_h / A_T < 3$$

$A_h$ is the cross-sectional area of the heat absorbing pipes,
N is the number of heat absorbing pipes,
AT is the cross-sectional area of the first and second transverse pipes.

If the walls in the pipes are thin, the width of the walls can be neglected and it is possible to use the outer diameters of the pipes for the calculation of the area. If the walls in the pipes are rather thick, it is necessary to use the inner diameters of the pipes for the calculation of the area.

If the diameter of the transvers pipes is 22mm, the diameter of the heat absorbing pipes is 15mm, and the number of heat absorbing pipes in each section is five, the ratio is calculated:

$$N*A_h / A_T = 5*\pi*7,5^2 / \pi*11^2 = 2.3$$

If the diameter of the transvers pipes is 32mm, the diameter of the heat absorbing pipes is 22mm, and the number of heat absorbing pipes in each section is five, the ratio is calculated:

$$N*A_h / A_T = 5*\pi*11^2 / \pi*16^2 = 2.4$$

Figure 2 shows a cross section through the solar collector disclosed in figure 1 along a line A-A. The solar collector includes a casing 28 for housing the channel system. The casing comprising a back side 29 made of metal sheet and a front side 30 made of a transparent material. The heat absorbing pipes is in thermal contact with the back side of the casing.

Preferably, the heat absorbing pipes is in thermal contact with the metal sheet. The metal sheet is preferably made of copper. The front side 30 is, for example, made of glass or a transparent polymer material in order to maximize the permeability of the solar energy. The metal sheet and the heat absorbing pipes are preferably painted in a dark color to increase the heat absorbing ability. The paint should be heat resistant.

Figure 3 shows an enlarged view of a part of a heat absorbing pipe according to a second embodiment of the invention. To further increase the efficiency of the solar collector at least some of the heat absorbing pipes 14 are provided with at least one return pipe 32 arranged to recirculate a part of the fluid in the heat absorbing cannel. Preferably, all of the heat absorbing pipes are provided with return pipes. The diameter of the return pipes is smaller than the diameter of the heat absorbing pipes. In this example, the diameter of the return pipes is 9mm. Preferably, each of the heat absorbing pipes 14 are provided with two or more return pipes 32. As seen from the figure, two return pipes are arranged on opposite sides of the heat absorbing pipe. It is also possible to arrange a plurality of pairs of return pipes along the length of the heat absorbing pipes. The return pipes are suitably made of metal, and preferably of copper. The return pipe has a first open end 33a connected to the heat absorbing pipe 14 and forming an inlet for receiving fluid from the heat absorbing pipe and a second open end 33b connected to the heat absorbing pipe 14 and forming an outlet for supplying fluid to the heat absorbing pipe. The second end 33b is positioned before the first end 33b in relation to the fluid transportation direction in the heat absorbing pipe.

The return pipes are arranged in parallel with the heat absorbing pipes. The return pipes are arranged to transport fluid from the heat absorbing pipe in a direction opposite the flow direction in the heat absorbing pipe and then to return the fluid to the heat absorbing pipe in order to recirculate a part of the fluid in the heat absorbing pipe.

In order to improve the recirculation, both ends 33a-b of the return pipe are bent towards each other to form hooks 34, 35 extending into the heat absorbing pipes. When a pair of return pipes is arranged on opposite sides of a heat absorbing pipe, as shown in figure 3, the hooks provide a narrowing of the heat absorbing pipe. When the fluid passes the first pair of hooks 34, an under pressure arises, which sucks the fluid out of the return pipe. When the fluid passes the second pair of hooks 35, an over pressure arises, which forces the fluid into the return pipe. Thus, the flow of fluid in the return pipes is increased and the recirculation is improved.

The present invention is not limited to the embodiments disclosed but may be varied and modified within the scope of the following claims. For example, the number of heat absorbing pipes and the dimensions of the transverse pipes and the heat absorbing pipes may vary. Further, the number sections may vary.

**Claims**

1.  A solar collector (1) comprising an inlet (2), an outlet (3) and a channel system (4) arranged for transportation of a fluid from the inlet to the outlet while the fluid absorbs solar energy, wherein the channel system comprises at least one section (22-25) including a distribution channel (18), a collecting channel (19), and a plurality of heat absorbing channels arranged for transportation of fluid from the distribution channel to the collecting channel, <u>**characterized in**</u> that the channel system comprises:

    - a first transverse pipe (10) designed to house said distribution channel and a second transverse pipe (11) arranged at a distance from the first transverse pipe and designed to house said collecting channel, and
    - a plurality of heat absorbing pipes (14) connected between the first and second transverse pipes and designed to house said plurality of heat absorbing cannels, and at least some of said heat absorbing pipes are provided with at least one return pipe (32) arranged to recirculate a part of the fluid in the heat absorbing cannel.

2.  The solar collector according to claim 1, wherein the diameter of said return pipe (32) is smaller than the diameter of said heat absorbing pipe (14), the return pipe is arranged to transport fluid from the heat absorbing pipe in a direction opposite the flow direction in the heat absorbing pipe and then to return the fluid to the heat absorbing pipe in order to recirculate a part of the fluid in the heat absorbing pipe.

3.  The solar collector according to claim 1 or 2, wherein at least some of said heat absorbing pipes are provided with at least two return pipes (32).

4.  The solar collector according to any of the previous claims, wherein both ends (33a-b) of the return pipe extends into the heat absorbing pipe 814) and are bent towards each other.

5.  The solar collector according to any of the previous claims, wherein the diameters of the heat collecting channels are smaller than the diameters of the distribution channel and the collecting channel and the relation between the cross-sectional area of said transverse pipes, the cross-sectional area of the heat absorbing pipes, and the number of heat absorbing pipes (14) is such that flow velocity in the heat absorbing pipes becomes slower than the flow velocity in the transverse pipes during transportation of fluid in the channel system.

6.  The solar collector according to claim 5, wherein the ratio between the sum of the cross sectional areas of the heat absorbing pipes (14) in one section, and the cross-sectional area of the first transverse pipe (18) is between is between 1.5 and 3, preferably between 1.8 and 2.8, and most preferably between 2 and 2.6.

7.  The solar collector according to any of the previous claims, wherein the number of heat absorbing pipes (14) in a section is five and the ratio between the inner diameter of the first transverse pipe (10,11) and the inner diameter of each of the heat collecting pipes is between 1.3 and 1.7, and more preferably between 1.4 and 1.6.

8.  The solar collector according to any of the previous claims, wherein the solar collector comprises a plurality of sections (22 - 25) connected in series, the collecting channel (18) of one section is connected to the distribution channel (19) of the next section, the sections are arranged such that the heat absorbing pipes (14) of neighboring sections are in parallel and the transportation direction of the fluid in the heat absorbing pipes of neighboring sections are opposite each other, and the first and a second transverse pipe (10,11) are arranged to alternatingly house said distribution channels and collecting channels, and include blocking elements arranged to prevent the fluid from flowing between the distribution channel of one of the sections and the collecting channel of the next section.

9.  The solar collector according to any of the previous claims, wherein the solar collector includes a casing (28) for housing the channel system, the casing comprising a back side made of metal sheet (29) and a front side (30) made of a transparent material, and the heat absorbing pipes (14) is in thermal contact with the back side of the casing.

10. The solar collector according to claim 9, wherein said heat absorbing pipes (14) and said metal sheet (29) are made of cupper and painted in a dark color.

Fig. 1

A-A

Fig 2

Fig. 3